# EUROPEAN PATENT APPLICATION

(11) **EP 4 414 583 A2**
(43) Date of publication of application: **14.08.2024**
(21) Application number: 23216925.0
(22) Date of filing: 14.12.2023
(51) Int. Cl.: F16F 9/34

(54) **REDUCED FRICTION VALVE ASSEMBLY**

(30) Priority: 14.12.2022 US 202263432652 P; 12.12.2023 US 202318537568
(71) Applicant: Fox Factory, Inc., Duluth, GA 30097 (US)
(72) Inventor: Brown IV, William O., GA, 30097 (US); Shvytov, Igor, GA, 30097 (US)
(74) Representative: Greaves Brewster LLP

(57) **Abstract**

A valve assembly (223) comprising:
a valve body (315) comprising at least one fluid flow port therethrough;
at least one shim (310, 320) pressed against said valve body, said at least one shim configured to control a fluid flow through said at least one fluid flow port; and
at least one friction reducing material disposed between said at least one shim and said valve body.

## Description

### CROSS-REFERENCE TO RELATED APPLICATIONS

This application claims priority from U.S. Provisional Patent Application No. 63/432,652 filed on December 14, 2022, and from U.S. Patent Application No. 18/537,568 filed on December 12, 2023.

### TECHNICAL FIELD

Embodiments of the invention generally relate to a valve assembly. Some embodiments relate to a suspension inclusive device comprising the valve assembly. Some embodiments relate to a shock assembly comprising the valve assembly. Some embodiments relate to a vehicle comprising the valve assembly and/or the suspension inclusive device and/or the shock assembly.

### BACKGROUND

Shock assemblies are used in numerous different vehicles, devices, or the like and configurations to absorb some or all of a movement that is received at a first portion of a vehicle, device, or the like before it is transmitted to a second portion of the vehicle, device, or the like. For example, when a front wheel of a vehicle hits a rough spot, the encounter will cause an impact force on the wheel. By utilizing suspension components including one or more shock assemblies, the impact force can be significantly reduced or even absorbed completely by the suspension before it is transmitted to a suspended portion of the vehicle.

Directional valving is often used to adjust and/or control a fluid flow through a fluid passage. For example, during a compression stroke, compression valving will allow the fluid to flow through a fluid passage. In contrast, during a rebound stroke, the compression valving will restrict the flow of fluid through the same fluid passage.

One of the ways to implement directional valving is to use a shim stack to cover the fluid passage through a component. When the shim stack is installed against a shim facing side of the component, a predefined amount of pressure (e.g., cracking pressure) is mechanically applied to the shim stack resulting in a biased closed state.

During a rebound operation of the shock assembly (and continuing the compression valving example) an increase in fluid pressure will be applied to the top of the shim stack. This applied fluid pressure will act in concert with the predefined cracking pressure of the shim stack to keep the shim stack against the shim facing side of the component and the fluid passage will remain closed.

In contrast, during a compression stroke, the fluid pressure will be applied through the fluid passage of the component and against the component facing side of the shim stack. As such, the applied fluid pressure will be acting opposite the predefined cracking pressure of the shim stack. Accordingly, when the fluid pressure acting against the component facing side of the shim stack is greater than the predefined cracking pressure, the shim stack will (at least partially) deflect (or move away from the component facing side) causing the fluid pathway to open and allowing fluid to flow therethrough.

Therefore, by adjusting the predefined cracking pressure of the directional valving, different performance characteristics of the shock assembly can be tuned. For example, a higher cracking pressure will result in a firmer suspension and conversely a lower cracking pressure will result in a softer suspension.

Of course, the dynamic response of the components of the shock assembly are important to suspension performance. For example, if the valving responds quickly and accurately (e.g., cracks at the correct pressure, etc.) the suspension will perform as it is tuned to perform.

However, as latency and/or hysteresis occur (or build up) with respect to the operation of the valving, the dynamic response of the shock assembly, and thus the overall suspension performance, will be deleteriously affected.

As such, it is an ongoing goal to reduce or remove latency and/or hysteresis from operational components of a shock assembly.

### SUMMARY

According to some embodiments there is provided a valve assembly. The valve assembly may comprise a valve body. The valve body may comprise at least one fluid flow port therethrough. The valve assembly may comprise at least one shim pressed against said valve body, said at least one shim configured to control a fluid flow through said at least one fluid flow port. The valve assembly may comprise at least one friction reducing material disposed between said at least one shim and said valve body.

In some embodiments the valve assembly may comprise a shim stack. The shim stack may comprise a plurality of shims. The shim stack may comprise a stick shim pressed against said valve body, said shim stack configured to control said fluid flow through said at least one fluid flow port with higher accuracy than a single shim.

In some embodiments the at least one friction reducing material may be disposed between at least two of said plurality of shims of said shim stack.

In some embodiments the at least one friction reducing material may be disposed between each of said plurality of shims of said shim stack.

In some embodiments the at least one friction reducing material may be disposed between said plurality of shims of said shim stack in an alternating manner.

In some embodiments the valve assembly may comprise at least two friction reducing materials disposed between at least two of said plurality of shims of said shim stack.

In some embodiments the at least two friction reducing materials may be disposed between each of said plurality of shims of said shim stack.

In some embodiments the at least one friction reducing material may be a friction reducing surface treatment applied to said at least one shim.

In some embodiments the friction reducing surface treatment may comprise one or more layers of a same type of said friction reducing surface treatment.

In some embodiments the friction reducing surface treatment may comprise one or more layers of different types of friction reducing surface treatments.

In some embodiments the at least one friction reducing material may be a stand-alone layer of friction reducing material.

In some embodiments the stand-alone layer of friction reducing material may comprise one or more sub-layers of a same type of said friction reducing material.

In some embodiments the stand-alone layer of friction reducing material may comprise one or more sub-layers of different types of friction reducing materials.

In some embodiments the at least one friction reducing material may be a friction reducing surface treatment applied to said valve body.

According to some embodiments there is provided a shock assembly. The shock assembly may comprise a damping chamber. The shock assembly may comprise a main piston coupled to a shaft and configured to divide said damping chamber into a compression side and a rebound side. The main piston may comprise a main piston body. The main piston may comprise at least one fluid pathway through said main piston body. The main piston may comprise at least one shim pressed against said main piston body, said at least one shim configured to meter a fluid flow through said at least one fluid pathway. The main piston may comprise at least one friction reducing material disposed between said at least one shim and said main piston body.

In some embodiments the shock assembly may further comprise a shim stack. The shim stack may comprise a plurality of shims. The shim stack may comprise a stick shim pressed against said main piston body, said shim stack configured to meter the fluid flow through said at least one fluid pathway with higher accuracy than a single shim.

In some embodiments the at least one friction reducing material may be disposed between at least two of said plurality of shims of said shim stack.

In some embodiments the at least one friction reducing material may be disposed between each of said plurality of shims of said shim stack.

In some embodiments the shock assembly may further comprise at least two friction reducing materials disposed between at least two of said plurality of shims of said shim stack.

In some embodiments the shock assembly may further comprise at least two friction reducing materials disposed between each of said plurality of shims of said shim stack.

In some embodiments the at least one friction reducing material may be a friction reducing surface treatment applied to said shim.

In some embodiments the friction reducing surface treatment may comprise one or more layers of a same type of said friction reducing surface treatment.

In some embodiments the friction reducing surface treatment may comprise one or more layers of different types of friction reducing surface treatments.

In some embodiments the at least one friction reducing material may be a stand-alone layer of friction reducing material.

In some embodiments said stand-alone layer of friction reducing material may comprise one or more sub-layers of a same type of said friction reducing material.

In some embodiments the stand-alone layer of friction reducing material may comprise one or more sub-layers of different types of friction reducing materials.

In some embodiments the at least one friction reducing material may be a friction reducing surface treatment applied to said main piston body.

According to some embodiments there is provided a valve assembly. The valve assembly may comprise a valve body. The valve body may comprise at least one fluid flow port therethrough. The valve assembly may comprise a shim stack comprising a plurality of shims, said shim stack pressed against said valve body and configured to control a fluid flow through said at least one fluid flow port. The valve assembly may comprise at least one friction reducing material disposed between at least two shims of said shim stack. It may be that the at least one friction reducing material is not disposed between a shim and said valve body.

According to some embodiments there is provided a shock assembly. The shock assembly may comprise a cylinder, said cylinder comprising a cylinder inner diameter. The shock assembly may comprise a piston shaft. The shock assembly may comprise a main damping piston, said main damping piston coupled to said piston shaft and configured for operation within said cylinder, said main damping piston configured to divide said cylinder into a compression side and a rebound side. The shock assembly may comprise a shim stack coupled to said main damping piston, wherein said shim stack is fit to meter fluid flow through said main damping piston. The shim stack may comprise a plurality of shims. The shim stack may comprise at least one layer of a friction reducing material disposed between said plurality of shims and/or a friction reducing surface treatment covering at least a portion of said plurality of shims.

According to some embodiments there is provided a suspension. The suspension may comprise a damping valve, wherein said valve is configured to regulate a fluid flow. The damping valve may comprise at least one shim. The damping valve may further comprise at least one layer of a friction reducing material disposed next to the at least one shim.

According to some embodiments there is provided a suspension. The suspension may comprise a damping valve, wherein said valve is configured to regulate a fluid flow. The damping valve may comprise at least one shim. At least a portion of the at least one shim may comprise a friction reducing surface treatment.

According to some embodiments there is provided a suspension damper. The suspension damper may comprise a valve configured to regulate a fluid flow. The valve may comprise at least one shim. The valve may comprise at least one layer of a friction reducing material disposed next to the at least one shim. At least a portion of the at least one shim may comprise a friction reducing surface treatment.

According to some embodiments there is provided a valve assembly for a suspension. The valve assembly may comprise at least one shim configured to regulate a fluid flow. The valve assembly may comprise at least one layer of a friction reducing material disposed next to the at least one shim. At least a portion of the at least one shim may comprise a friction reducing surface treatment.

According to some embodiments there is provided a valve assembly for a suspension. The valve assembly may comprise at least one shim configured to regulate a fluid flow. The valve assembly may comprise at least one layer of a friction reducing material disposed next to the at least one shim.

According to some embodiments there is provided a valve assembly for a damper. The valve assembly may comprise at least one shim configured to regulate a fluid flow. At least a portion of the at least one shim may comprise a friction-reducing surface treatment.

According to some embodiments there is provided a suspension inclusive device comprising a valve assembly as set out in any of the statements above, or as described or as claimed anywhere herein. The suspension inclusive device may be an exoskeleton, a seat frame, a prosthetic, a suspended floor, a hood and/or trunk support for a vehicle, and a door closer, and the like.

According to some embodiments there is provided a shock assembly. The shock assembly may comprise a damping chamber. The shock assembly may comprise a main piston coupled to a shaft and configured to divide said damping chamber into a compression side and a rebound side. The main piston may comprise a valve assembly as set out in any of the statements above, or as described or as claimed anywhere herein.

According to some embodiments there is provided a vehicle comprising: a valve assembly as set out in any of the statements above, or as described or as claimed anywhere herein; and/or a suspension inclusive device as set out in any of the statements above, or as described or as claimed anywhere herein; and/or a shock assembly as set out in any of the statements above, or as described or as claimed anywhere herein.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

Aspects of the present invention are illustrated by way of example, and not by way of limitation, in the accompanying drawings, wherein:
Figure 1 is a perspective view of a shock assembly with a reduced friction valve assembly, in accordance with an embodiment.
Figure 2 is a cross-section view of the shock assembly with reduced friction valve assembly of Figure 1, in accordance with an embodiment.
Figure 3A is a cross-section view of a piston with a reduced friction valve assembly, in accordance with an embodiment.
Figure 3B is an exploded view of the piston with a reduced friction valve assembly of Figure 3A, in accordance with an embodiment.
Figure 4A is a top perspective view of a reduced friction shim, in accordance with an embodiment.
Figure 4B is a side view of the reduced friction shim of Figure 4A, in accordance with an embodiment.
Figure 5 is a cross-section view of a shim stack with alternating layers of a friction reducing material and shims, in accordance with an embodiment.
Figure 6 is a cross-section view of a shim stack with varying layers of friction reducing material therebetween, in accordance with an embodiment.
Figure 7 is a cross-section view of two shims and a layer of friction reducing material therebetween, in accordance with an embodiment.

The drawings referred to in this description should be understood as not being drawn to scale except if specifically noted.

### DETAILED DESCRIPTION

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, and objects have not been described in detail as not to unnecessarily obscure aspects of the present disclosure.

### TERMINOLOGY

In the following discussion, a number of terms and directional language is utilized.

The term latency (as used herein) refers to a time delay with respect to the dynamic response of a directional valve. The time delay could be at the opening and/or closing of the directional valve and/or between the operations thereof, e.g., the time between a first motion (e.g., closing) and a next motion (e.g., opening). In one embodiment, latency is caused by van der Waals forces acting between a sealing shim and the edge of the port being sealed.

The term hysteresis (as used herein) refers to inconsistencies in a damping curve. For example, a shock assembly is selected and/or tuned to provide a specific and consistent damping curve. The repeated, specific, and reliable performance of a vehicle is dependent upon the damping curve being as accurate as possible. There are a number of things that can cause hysteresis such as, but not limited to, pressure induced body expansion, sticking between valves, friction between valves, friction between the glide rings/piston/body, gas compression, gas expansion, etc.

When latency and/or hysteresis occur within a valve system, the dynamic response of the shock assembly and even the overall suspension performance, will be deleteriously affected.

For example, latency in the opening of the shims can be caused by the van der Waals forces present between the sealing shim and the piston which can cause an increase in the cracking pressure of the shim stack. Similarly, latency in the opening of the shims can be caused by frictional forces between static shims within a shim stack which will also increase the initial cracking pressure of the shim stack.

However, the frictional forces between static shims will also introduce hysteresis. For example, as soon as the increased cracking pressure of the shim stack is overcome by the fluid force acting thereagainst, the shim stack will deflect and the frictional forces will be reduced or removed. As the frictional forces disappear, the cracking pressure (or force required to deflect the shim stack) will return to its original value. However, the fluid force acting against the shim stack will initially remain at its higher level. This quick change in the pressure differential between the applied fluid pressure and the shim stack cracking pressure will jarringly open the shim stack flow path resulting in a much larger relief fluid flow therethrough than expected. This different fluid flow rate will result in an inconsistent damping curve and inconsistent damping performance.

Embodiments disclosed herein provide a novel method for reducing latency and/or hysteresis within the system by reducing the static and kinetic coefficients of friction between the shims in a shim stack.

It should be appreciated that the reduced friction valve assembly described herein can be used with a number of different applications or systems that use one or more reduced friction valve shock assemblies. Applications include a vehicle such as, but not limited to a bicycle, an electric bike (e-bike), a hybrid bike, a scooter, a motorcycle, an ATV, a personal water craft (PWC), a vehicle with three or more wheels (e.g., a UTV such as a side-by-side, a car, truck, etc.), a snow machine, an aircraft, and the like.

Additional examples include a suspension inclusive device such as, but not limited to, an exoskeleton, a seat frame, a prosthetic, a suspended floor, a hood and/or trunk support for a vehicle, a door closer, and the like. It should be noted that while embodiments are referred to as being part of a shock assembly, they are not limited to shock assemblies and may be applied to other embodiments, including non-shock assembly valving that utilizes shim stacks.

In the following discussion, one or more of the component of the reduced friction valve assembly may be active and/or semi-active. In general, an active and/or semi-active component will have one or more electronically adjustable features controlled by a motive component such as a solenoid, stepper motor, electric motor, or the like. In operation, the active and/or semi-active component will receive an input command which will cause the motive component to move, modify, or otherwise change one or more aspects of one or more electronically adjustable features.

In one embodiment, the reduced friction valve assembly may be used in valves, such as base valves, compression valves, rebound valves, piston valves, and the like. Embodiments of different active valve suspension and components where the reduced friction valve assembly may be utilized are disclosed in U.S. Patents 8,838,335; 9,353,818; 9,682,604; 9,797,467; 10,036,443; 10,415,662; to which reference is specifically made .

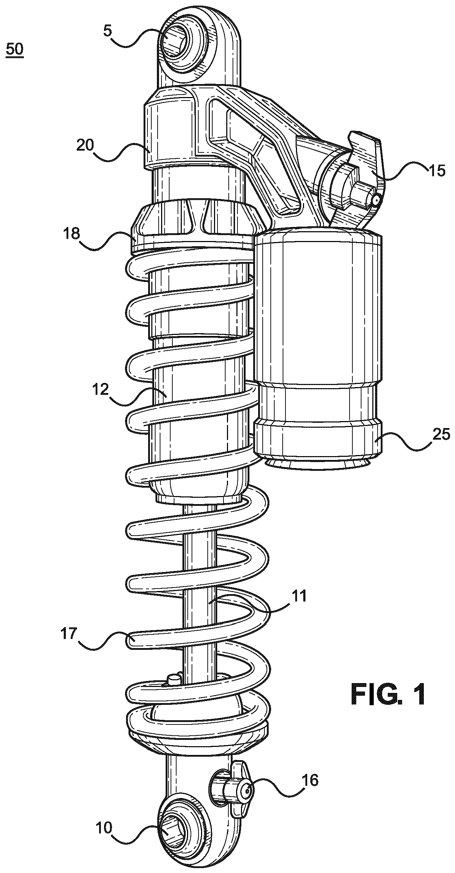

Referring now to Figure 1, a perspective view of a shock assembly 50 with a reduced friction valve assembly is shown in accordance with an embodiment. In one embodiment, shock assembly 50 is a coil-over shock assembly, such as, for example, a FOX 2.0 zero QS3-R shock assembly with a velocity-sensitive shimmed damping system, one or more coil-over springs 17, a spring preload adjuster 18, and a fluid reservoir 25. Although in one embodiment the shock assembly 50 is described as coil-over style shock assembly. In another embodiment, the shock assembly 50 is a FOX load optimizing air technology (FLOAT) air shock assembly with a reservoir. In general, an air shock assembly is a highperformance shock assembly that use air as springs, instead of one or more coil-over springs 17. In yet another embodiment, the shock assembly 50 may be another type of shock assembly such as, but not limited to, a stand-alone fluid damper assembly, an air sprung fluid damper assembly, a monotube shock assembly, a twin-tube shock assembly, or the like.

In one embodiment, shock assembly 50 includes attachment features such as a chassis mount (e.g., upper eyelet 5) and a frame mount (e.g., lower eyelet 10) which allow shock assembly 50 to be coupled between the unsprung portion of the suspension (e.g., the components of the suspension affected by, or in contact with, the terrain) and the sprung portion. In contrast, if the shock assembly 50 is installed in an inverted configuration, upper eyelet 5 would be a frame mount and lower eyelet 10 would be the chassis mount. Although eyelets are shown, it should be appreciated that the mounting systems may be bolts, welds, or the like, the use of eyelets is provided as one embodiment and for purposes of clarity.

Shock assembly 50 of Figure 1 also includes body 12, a body cap 20, and a fluid reservoir 25 fluidly coupled with the body 12. In one embodiment, fluid reservoir 25 is a remote fluid reservoir.

Often, fluid reservoir 25 will include an internal floating piston (IFP) fluidly dividing the external reservoir into a working fluid side and a pressurized gas side. Where the pressurized gas side is able to compress to compensate for the shaft displaced fluid that enters the reservoir. Shaft displaced fluid refers to the fluid that is displaced from the damper chamber due to a reduction in available fluid volume within the damper chamber due to the additional volume of shaft 11 as it moves into a main chamber within body 12 during a compression stroke. Fluid communication between the main chamber and the fluid reservoir 25 may be via a flow channel and include additional valving. Additional detail and description of an external reservoir is described in U.S. Pat. No. 7,374,028 to which reference is made.

In one embodiment, fluid reservoir 25 is an external reservoir. In another embodiment, the fluid reservoir 25 is defined by a base valve within the main chamber. Often, an IFP is also located within the fluid reservoir 25 portion of the main chamber and again, is used to compensate for the changes in available volume of the main chamber due to shaft displaced volume.

For additional detail and description of a shock absorber assembly, see, as an example, U.S. Patent 10,576,803 to which reference is made. For additional detail and description of position-sensitive shock absorber/damper, see, as an example, U.S. Patent 6,296,092 to which reference is made.

In one embodiment, shock assembly 50 optionally includes a compression adjuster 35 and/or a rebound adjuster 16. For additional detail and description of adjustable compression and/or rebound damping, preload, crossover, bottom-out, and the like for a shock absorber/damper, see, as an example, U.S. Patent 10,036,443, to which reference is made.

Although components of Figure 1, are shown in given locations in accordance with one embodiment, in other embodiments, one, some, or all of the components shown in Figure 1 could be inverted, located in other locations, combined, separated into two or more pieces and dispersed, etc. The use of the locations of the components as shown in Figure 1 is indicative of one embodiment, which is provided for purposes of clarity.

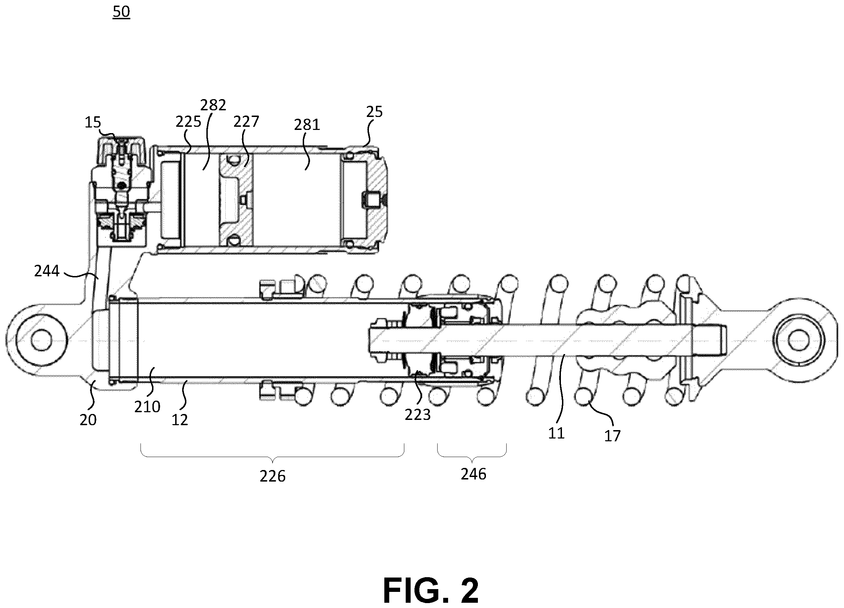

With reference now to Figure 2, a cross-section view of shock assembly 50 with the reduced friction valve assembly of Figure 1 is shown in accordance with an embodiment. For purpose of clarity, in the discussion of Figure 2, all of the components described in Figure 1 are incorporated by reference in their entirety.

Shock assembly 50 of Figure 2 includes a chamber 210 within body 12, and a piston 223 coupled with the shaft 11. The piston 223 and a portion of shaft 11 are located within chamber 210 and divide chamber 210 into a compression side 226 and a rebound side 246. In general, piston 223 may be vented or solid and internal or external bypasses may also be present.

Fluid reservoir 25 includes a reservoir chamber 225 that is divided by an IFP 227. In one embodiment, one side (e.g., side 281) of the IFP 227 divided reservoir chamber 225 is filled with a pressurized gas (e.g., nitrogen, or the like) and the other side (e.g., side 282) of reservoir chamber 225 contains working fluid. Reservoir chamber 225 is fluidly coupled with chamber 210 of body 12 via flow path 244 through body cap 20. In one embodiment, the optional compression adjuster 15 valving for controlling the compression flow rate from the chamber 210 to the reservoir chamber 225 is coupled with body cap 20 and resides within a portion of flow path 244.

Coil-over spring 17 provides an expansive (e.g., spring) force on the shock assembly 50. In one embodiment, when installed, the resting sag length of the mounted shock assembly 50 is maintained in compression by the weight of the body it is suspending (e.g., the sprung portion of the vehicle), and in expansion by the "spring" force produced by the expansion component (e.g., coil-over spring 17).

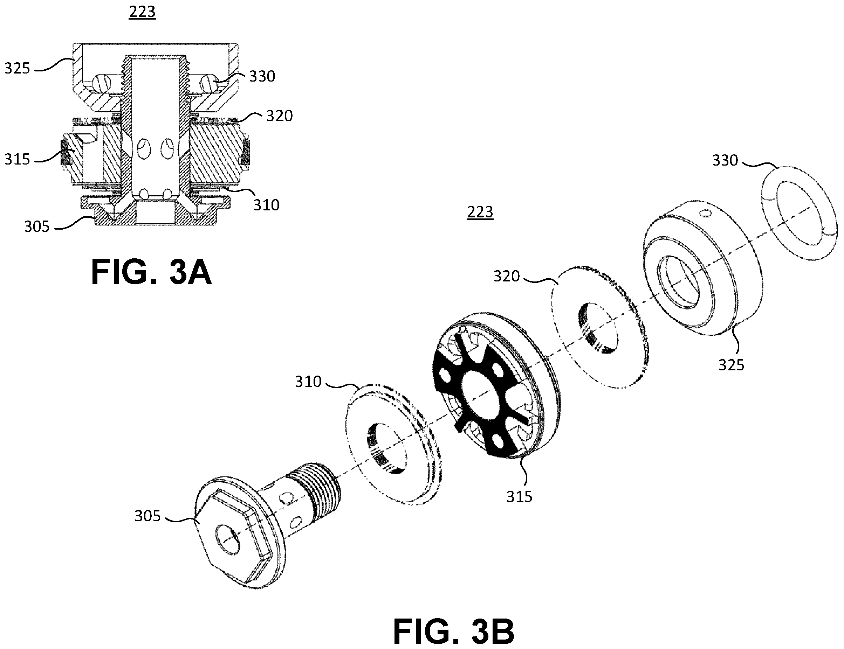

With reference now to Figure 3A, a cross-section view of a piston 223 with a reduced friction valve assembly is shown in accordance with an embodiment. Figure 3B is an exploded view of the piston 223 with a reduced friction valve assembly of Figure 3A.

In one embodiment, piston 223 includes a bolt 305, rebound valving assembly (e.g., rebound shim stack 310), piston body 315 (with ports therethrough), compression valving assembly (e.g., compression shim stack 320), top out plate 325, and an O-ring 330.

In one embodiment, compression shim stack 320 and rebound shim stack 310 each include a plurality of shim stacks. In general, the cracking pressure is used to set and/or control the compression and rebound damping characteristics of piston 223. In one embodiment, the compression shim stack 320 and rebound shim stack 310 are built with the same components and geometries and provide an equivalent cracking pressure. In another embodiment, the compression shim stack 320 and rebound shim stack 310 are built with different components and/or geometries to provide a valve with a different compression side and rebound side cracking pressures.

For example, during the shock assembly 50 building process (or rebuilding process, etc.), the components of the valve assemblies (e.g., compression shim stack 320 and rebound shim stack 310) are selected based on the desired cracking pressure values. Initially, a ball park cracking pressure is achieved by selecting and utilizing shims with certain characteristics to build each shim stack. By changing the rigidity of the shim stack, varying the diameter of the footprint of the shimstack, selecting the appropriate outer diameter (OD) or thickness of the stick shim 546 (e.g., the innermost shim or deload shim), and the like will allow the shim stack to be built within the ballpark cracking pressure.

During actual assembly, the cracking pressure is more finely tuned by adjusting the location and interactive portion of the outlet cover with respect to the outlet cover shimstack to establish the flat plate area of the shim that can be contacted by the working fluid and thus, the fluid pressure acting on the shimstack.

Finally, as the bolt 305 is tightened, the compression shim stack 320, piston body 315, and rebound shim stack 310 are squeezed between the bolt 305 and the top out plate 325. In so doing, the compression shim stack 320 is pressed against one side of piston body 315 and rebound shim stack 310 is pressed against the other side of piston body 315. The force applied by the bolt 305 and top out plate 325 is then set at the desired cracking pressure.

In another embodiment, the force applied by top out plate 325 on rebound shim stack 310 can be adjusted independently from the force applied by bolt 305 on compression shim stack 320 to provide a different cracking pressure between the rebound shim stack 310 and the compression shim stack 320.

In one embodiment, a compression adjuster 15 (and/or a rebound adjuster) adjusts the compression (and or rebound) by changing the fluid flow through one or more bleed holes in a compression chamber (or base valve, etc.) to soften or stiffen the suspension.

In one embodiment, the reduced friction valve assembly is used in a bottom out valve, or the like. Additional information regarding bottom-out features and control can be found in U.S. Patent 11,131,361 to which reference is made.

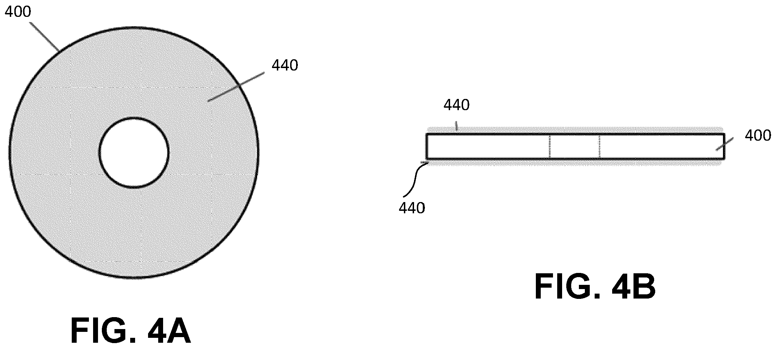

With reference now to Figure 4A, a top-down view of a shim 400 is shown in accordance with an embodiment. Figure 4B is a side view of a shim 400, according to one embodiment. In one embodiment, the shims 400 are circular in shape. In another embodiment, the shims 400 may have one, or a plurality of different geometric shapes such as ovals and the like. In some cases, the shims 400 are flat. In other use cases, one or more of the shims 400 are bent, formed like a bowl, or the like. In general, the shape and geometry of the shim 400 can be modified for purposes such as fitment, location within the shim stack, to induce a desired preload, and the like. Moreover, the shape of one, some, or all of the shims 400 in a shim stack could be uniform or could be non-uniform.

As discussed herein, static friction can occur between the shims 400 in the shim stack 510, between the stick shim 546 and the surface of the valve body (e.g., piston body 315), and/or between the shim 400 and other components to which it comes in contact.

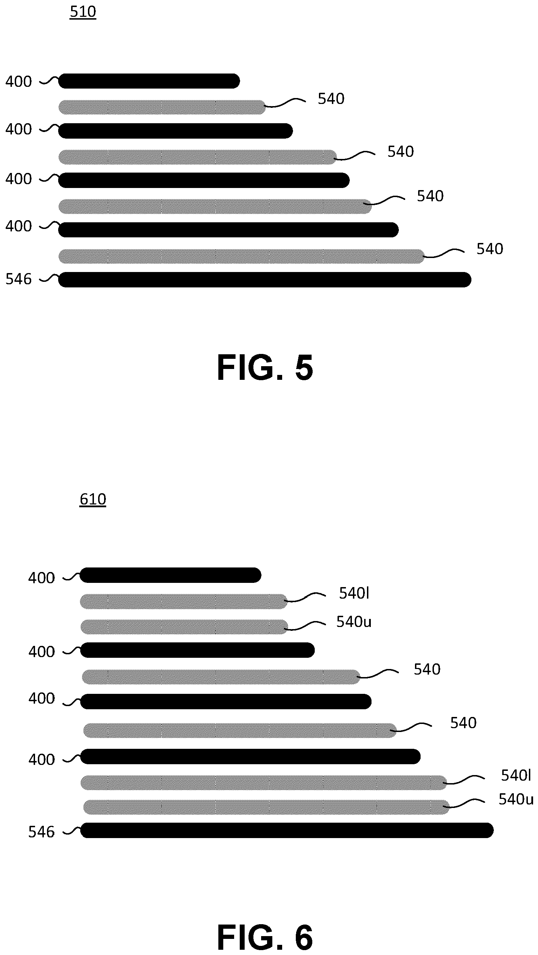

In addition, the force or pressure that builds up to the opening of the shim stack 510 can cause additional friction and shear force along an axis (such as the left to right axis of at least Figure 4B of the shims 400. For example, as the stick shim 546 is lifted to allow fluid flow it will exert an inward force in the axial direction on the shim 400 adjacent to it. In turn, that shim 400 will lift and exert an inward force in the axial direction on the next shim 400, and so forth. This force inward force in the axial direction will increase the friction between the shims 400, which can cause latency and hysteresis. By introducing a friction reducing surface treatment 440 (and/or a layer 540 of a friction reducing material discussed in Figures 5-7) in between shims 400, the shear force and frictional force (both static and kinetic) can be reduced.

Referring now to Figures 4A and 4B, a portion of shim 400 is treated with at least one friction reducing surface treatment 440. For example, as shown in Figure 4A, one side of shim 400 is treated with at least one friction reducing surface treatment 440. In contrast, as shown in Figure 4B, both sides of shim 400 are treated with at least one friction reducing surface treatment 440.

Basically, the friction reduction surface treatment 440 has a lower static and kinetic friction coefficient than the plain face of the shim 400. In one embodiment, the friction reduction surface treatment 440 is PTFE, or the like. The friction reducing surface treatment 440 is used to reduce a coefficient of friction between shim 400 any other surface that might contact the shim 400 (e.g., another shim 400, a valve face, or the like).

For example, the friction reducing surface treatment 440 could be used on a side of the stick shim 546 pressed against the face of the valve body (e.g., piston body 315, or another valve type such as a base valve, or other directional controlled valve). In one embodiment, the face of the valve body receives a layer of friction reduction surface treatment 440.

In one embodiment, the friction reduction surface treatment 440 is a film applied to the surface of the shim 400. The friction reducing surface treatment 440 can be applied as a coating, a surface finish, or a similar friction reducing technique. For example, the friction reduction surface treatment 440 is a splatter coat type layer applied to the surface of the shim 400. In one embodiment, the friction reduction surface treatment 440 is a nano-coat applied to the surface of the shim 400. In one embodiment, the thickness of the coating of the friction reducing surface treatment 440 will vary based on the number of layers or type of coating. For example, the coating can be as thin as a few dozen atoms or much thicker.

In one embodiment, the friction reducing surface treatment 440 is made of one or several layers of the same friction reducing coating or several layers of different friction reducing coatings. In one embodiment, the friction reducing surface treatment 440 is a combination of a surface finish and at least one coating.

In one embodiment, the friction reducing surface treatment 440 is done to only a portion of the available surface of shim 400. For example, a shim stack (such as shim stack 510) could include a shim 400 having a friction-reducing surface treatment 440 being disposed between shims 400 that do not have the same treatment. For example, a shim 400 having a friction-reducing surface treatment 440 could be disposed between the stick shim 546 and its adjacent shim 400. In one embodiment, shims 400 having a friction-reducing surface treatment are disposed between untreated shims 400 in a shim stack in an alternating manner.

With reference now to Figure 5, a cross-section view of a shim stack 510 with alternating layers 540 of a friction reducing material and shims 400 is shown in accordance with one embodiment. Unlike the friction reduction surface treatment 440, the layer 540 of a friction reducing material is a stand-alone layer.

In one embodiment, the layer 540 of friction reducing material (similar to the friction reduction surface treatment 440) has a lower static and kinetic friction coefficient than the plain face of the shim 400. In one embodiment, the layer 540 of a friction reducing material is PTFE, or the like. The layer 540 of a friction reducing material is used to reduce a coefficient of friction between shim 400 any other surface that might contact the shim 400 (e.g., another shim 400, a valve face, or the like). In one embodiment, the layer 540 of friction reducing material is disposed between the stick shim 546 and the face of the valve body (e.g., piston body 315, or another valve type such as a base valve, or other directional controlled valve).

In one embodiment, each layer 540 of the friction reducing material is made of one or several sublayers of friction reducing material. In one embodiment, the layer 540 of friction reducing material is made of several sublayers of different friction reducing materials. In another embodiment, the layer 540 of friction reducing material is made of several sublayers of similar friction reducing materials.

In another embodiment, instead of the layer 540 of friction reducing material being separate from, and deployed between, each of the shims 400, a friction reducing surface treatment 440 is applied to one or more shims, e.g., the shims 400 are treated with a friction reducing surface treatment. In one embodiment, in addition to the layer 540 of friction reducing material being deployed between each of the shims 400, a friction reducing surface treatment 440 is also applied to one or more shims 400.

Alternatively, in one shim stack 510 arrangement, some of the shims 400 will have a layer 540 of friction reducing material therebetween, while other of the shims 400 will have a friction reducing surface treatment 440 and at least one layer 540 of a friction reducing material disposed between the shims 400 in an alternating manner.

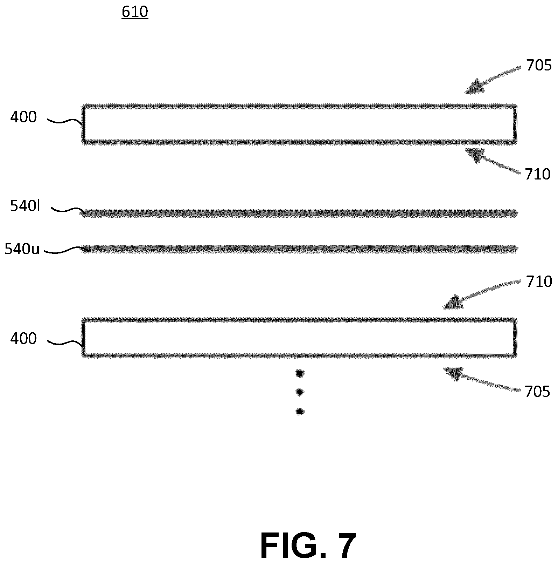

As shown and described in further detail at Figure 7, in one embodiment, at least one side of at least one shim 400 has a rough surface finish in order to better engage with the friction reducing surface treatment 440 and/or the layer 540 of friction reducing material.

Referring now to Figure 6, a cross-section view of a shim stack 610 with differing layers 540 of a friction reducing material between shims 400 is shown in accordance with one embodiment.

For example, in the shim stack 610 there may be two layers 540u and 540l of a friction reducing material between one, some, or all of the shims 400. In another example, there may be more than two layer (e.g., multiple layers) of friction reducing material between one, some, or all of the shims 400. In another example, there may be a single layer 540 of friction reducing material between one or some of the shims 400 and two (or more) layers 540u and 540l of a friction reducing material between one, some, or all of the remaining shims 400.

In one embodiment, similar to the discussion herein, instead of one or more layers 540 of friction reducing material between the shims 400, the friction reducing surface treatment 440 is applied to both shim facing sides of one, some, or all of shims 400. In one embodiment, one or more layers 540 of friction reducing material is deployed between one, some, or all of the shims 400 in addition to the friction reducing surface treatment 440 being applied to one, some, or all of the shims 400.

In one embodiment, at least one layer 540 of the friction reducing material and the friction reducing surface treatment 440 are used on a subset of shims 400/shim interfaces to address a dominant source of friction. For example, there could be two layers 540l and 540u of the friction reducing material (and/or the friction reducing surface treatment 440) between the stick shim 546 and its adjacent shim 400, while the rest of the shims 400 only have a single layer 540 of a friction reducing material therebetween.

Referring now to Figure 7, a cross-section view of two shims 400 and 400 and two layers 540u and 540l of a friction reducing material in between the shims 400 and 400 is shown in accordance with an embodiment.

In one embodiment, each of shims 400 and 400 have a first side 710 and a second side 705. In one embodiment, the first side 710 is a rough side. The rough surface on the first side 710 allows for the shim to grip the adjacent layer of the friction reducing material (e.g., layer 540u or layer 540l).

In one embodiment, using two layers 540u and 540l of friction reducing material will allow the layers 540u and 540l to slide against each other while the shims 400 and 400 hold onto the opposite sides of layers 540u and 5401. In so doing, the static and kinetic coefficients of friction are further reduced as compared to an embodiment with a single layer of friction reducing material between two shims 400 and 400. Moreover, as the layers 540u and 540l of the friction reducing material do not separate, any van der Waal forces between the two is acceptable and will not affect latency or hysteresis.

In one embodiment, the second side 705 of the shim can be either rough or smooth. For example if the shim is in the middle of a shim stack 610, there would be another layer of the friction reducing material next to the second side 705 and as such, the second side 705 would be rough to hold onto the layer of friction reducing material as discussed above. In one embodiment, the second side 705 of the shim is rough if it is the bottom side of the stick shim 546 that will be in contact with the piston face.

In one embodiment, the second side 705 is smooth if it is not next to a layer of friction reducing material and is not the bottom side of the stick shim 546.

While a standard shims stack is discussed, it should be understood that embodiments are not limited to such. In one embodiment, the shims are preloaded by an external force. In one embodiment, the shims 400 are bent, or formed like a bowl, to induce a preload. In one embodiment, the shims in question are coupled to a base valve rather than a damping piston.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments can be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the claims and their equivalents.

## Claims

1. A valve assembly comprising:
a valve body comprising at least one fluid flow port therethrough;
at least one shim pressed against said valve body, said at least one shim configured to control a fluid flow through said at least one fluid flow port; and
at least one friction reducing material disposed between said at least one shim and said valve body.

2. A valve assembly as claimed in Claim 1, further comprising:
a shim stack comprising a plurality of shims, the shim stack configured to control said fluid flow through said at least one fluid flow port with higher accuracy than a single shim;
and optionally wherein said shim stack comprises a stick shim pressed against said valve body.

3. A valve assembly as claimed in Claim 2, wherein said at least one friction reducing material is disposed between at least two of said plurality of shims of said shim stack, and optionally wherein said at least one friction reducing material is not disposed between a shim and said valve body.

4. A valve assembly as claimed in Claim 2 or 3, wherein said at least one friction reducing material is disposed between each of said plurality of shims of said shim stack.

5. A valve assembly as claimed in Claim 2 or 3, wherein said at least one friction reducing material is disposed between said plurality of shims of said shim stack in an alternating manner.

6. A valve assembly as claimed in any of Claims 2 to 5, further comprising at least two friction reducing materials disposed between at least two of said plurality of shims of said shim stack.

7. A valve assembly as claimed in any of Claims 2 to 6, further comprising at least two friction reducing materials disposed between each of said plurality of shims of said shim stack.

8. A valve assembly as claimed in any preceding Claim, wherein said at least one friction reducing material comprises a friction reducing surface treatment applied to said at least one shim.

9. A valve assembly as claimed in Claim 8, wherein said friction reducing surface treatment comprises one or more layers of a same type of said friction reducing surface treatment, or one or more layers of different types of friction reducing surface treatments.

10. A valve assembly as claimed in any preceding Claim, wherein said at least one friction reducing material is a stand-alone layer of friction reducing material.

11. A valve assembly as claimed in Claim 10, wherein said stand-alone layer of friction reducing material comprises one or more sub-layers of a same type of said friction reducing material, or one or more sub-layers of different types of friction reducing materials.

12. A valve assembly as claimed in any preceding Claim, wherein said at least one friction reducing material comprises a friction reducing surface treatment applied to said valve body.

13. A suspension inclusive device, such as an exoskeleton, a seat frame, a prosthetic, a suspended floor, a hood and/or trunk support for a vehicle, and a door closer, which suspension inclusive device comprises a valve assembly as claimed in any of Claims 1 to 12.

14. A shock assembly comprising:
a damping chamber; and
a main piston coupled to a shaft and configured to divide said damping chamber into a compression side and a rebound side, said main piston comprising a valve assembly as claimed in any of Claims 1 to 12.

15. A vehicle comprising:
a valve assembly as claimed in any of Claims 1 to 12; and/or
a suspension inclusive device as claimed in Claim 13; and/or
a shock assembly as claimed in Claim 14;
and optionally wherein said vehicle is one of: a bicycle; an electric bike (e-bike); a hybrid bike; a scooter; a motorcycle; an all-terrain vehicle (ATV); a personal watercraft (PWC); a vehicle with three or more wheels; a utility task vehicle (UTV); a side-by-side, a car, a truck; a snow machine; and an aircraft.
